Europäisches Patentamt

European Patent Office

Office européen des brevets

(11) Veröffentlichungsnummer: **0 317 989**
**A1**

## EUROPÄISCHE PATENTANMELDUNG

(21) Anmeldenummer: **88119518.4**

(51) Int. Cl.⁴: **H01G 1/11**

(22) Anmeldetag: **24.11.88**

(30) Priorität: **26.11.87 DE 3740016**

(43) Veröffentlichungstag der Anmeldung:
**31.05.89 Patentblatt 89/22**

(84) Benannte Vertragsstaaten:
**BE CH DE FR GB IT LI NL SE**

(71) Anmelder: **Standard Elektrik Lorenz Aktiengesellschaft**
**Lorenzstrasse 10**
**D-7000 Stuttgart 40(DE)**

(72) Erfinder: **Becher, Joachim**
**Ulmenstrasse 25**
**D-7052 Schwaikheim(DE)**

(74) Vertreter: **Hösch, Günther, Dipl.-Ing. et al**
**Standard Elektrik Lorenz AG Patent- und**
**Lizenzwesen Postfach 30 09 29**
**D-7000 Stuttgart 30(DE)**

(54) **Elektrischer Kondensator mit Abreisssicherung und Verfahren zur Herstellung eines solchen Kondensators.**

(57) Elektrische Kondensatoren mit Abreißsicherung besitzen eine bei zu hohem Innendruck aufgehende gestauchte Ringsicke im Kondensatorgehäuse und einen Abreißdraht mit einer Sollbruchstelle zwischen Kondensatorkörper und einem Kondensatoranschluß. Der Abreißdraht wird beim Ansprechen der Ringsikke an der Sollbruchstelle zerrissen. Bei den bekannten Kondensatoren wirkt bereits bei einem geringen Innendruck eine Zugspannung auf den Abreißdraht. Dies kann zu vorzeitigem oder nicht notwendigem Abschalten des Kondensators führen.

Beim erfindungsgemäßen Kondensator besitzt die Abreißsicherung (15) einen flexibel ausgebildeten Abschnitt (16). Dieser ist lose eingebaut, so daß die gestauchte Ringsicke um ein bestimmtes Maß öffnen kann, ohne daß die Abreißsicherung (15) anspricht.

Anwendbar bei Kondensatoren, die hohen Temperatur-Wechselbelastungen ausgesetzt sind.

FIG.1

EP 0 317 989 A1

## Elektrischer Kondensator mit Abreißsicherung und Verfahren zur Herstellung eines solchen Kondensators.

Die Erfindung bezieht sich auf einen elektrischen Kondensator mit Abreißsicherung gemäß dem Oberbegriff des Anspruchs 1 und auf ein Verfahren zur Herstellung eines solchen Kondensators gemäß dem Oberbegriff des Anspruchs 6.

Bei bekannten Kondensatoren ist die Abreißsicherung nach der Montage in gespanntem Zustand am Deckel befestigt. Der Deckel ist in der Regel dadurch nach innen gedrückt worden, daß bei einem runden Gehäuse wenigstens eine Ringsicke durch Stauchen erzeugt worden ist. Tritt nun im Kondensatorgehäuse ein Überdruck auf, so öffnet sich die gestauchte Ringsicke, wodurch sich der Deckel nach außen bewegt und die Abreißsicherung durchreißt.

Es hat sich herausgestellt, daß bei den bekannten Kondensatoren die Abreißsicherung auch schon dann anspricht, wenn der Kondensator noch nicht schadhaft ist, er noch keine unzulässige Übertemperatur aufweist oder sich ein zu großer Überdruck entwickelt hat.

Mit der vorliegenden Erfindung soll daher die Aufgabe gelöst werden, einen Kondensator ohne Anwendung zusätzlicher Teile so auszubilden, daß die Abreißsicherung tatsächlich nur im Ernstfall oder wenigstens in der Regel nur im Ernstfall abgerissen wird.

Gelöst wird diese Aufgabe durch die im Kennzeichen des Anspruchs 1 angegebenen Merkmale bzw. durch die im Kennzeichen des Anspruchs 6 angegebenen Verfahrensschritte. Hierdurch wird erreicht, daß bei geringen, unschädlichen Temperaturerhöhungen und/oder bei unschädlicher Gasbildung im Kondensatorgehäuse die Abreißsicherung noch nicht anspricht.

Weitere vorteilhafte Einzelheiten der Erfindung sind in den Unteransprüchen angegeben und nachfolgend anhand der in der Zeichnung veranschaulichten Ausführungsbeispiele beschrieben.

Es zeigen:

Fig. 1 ein Ausführungsbeispiel des Kondensators im Längsschnitt,

Fig. 2 den Ausschnitt aus einem Kondensatorkörper bei einem Kondensator gemäß Fig. 1 und

Fig. 3 bis 6 verschiedene Ausführungsformen der Abreißsicherung.

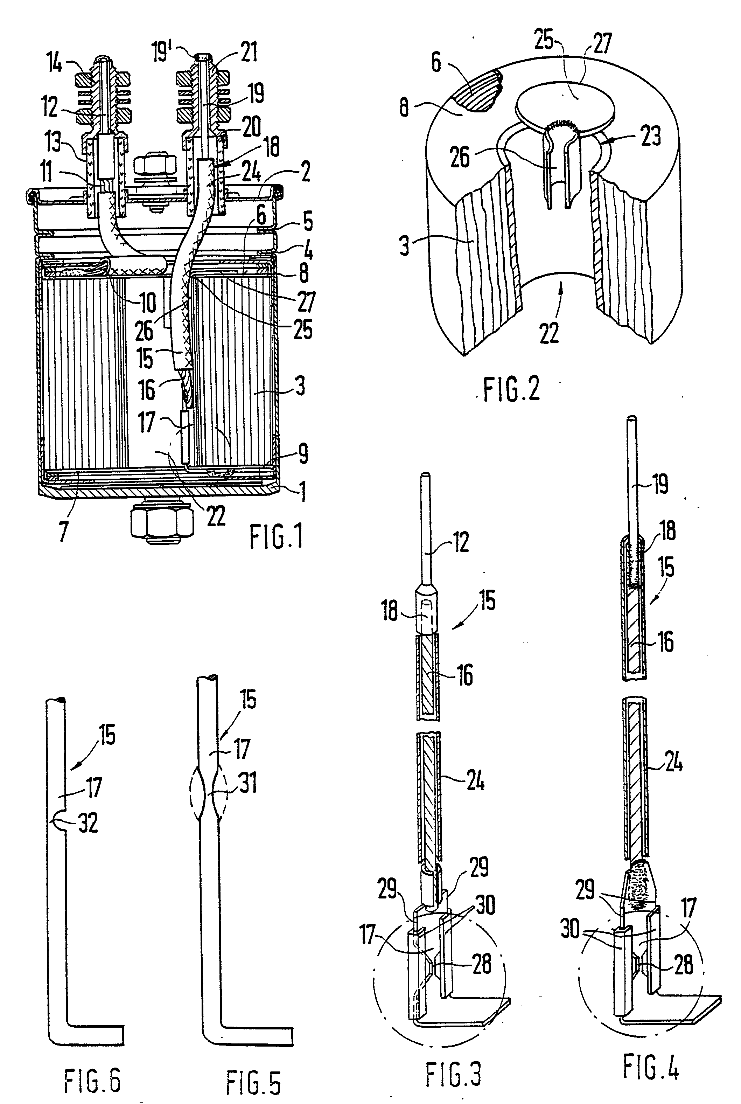

In Fig. 1 ist das als Becher ausgebildete Kondensatorgehäuse 1 mit Deckel 2 zu erkennen. Das Kondensatorgehäuse 1 ist beispielsweise durch Umbördeln des Deckelrandes und gegebenenfalls nach Einlage einer Dichtung luft- und flüssigkeitsdicht verschlossen. Im Kondensatorgehäuse 1 ist der als Wickelkörper ausgebildete Kondensatorkörper 3 eingesetzt und mittels der gestauchten Ringsicke 4 des Kondensatorgehäuses 1 lagegesichert gehalten. Das Kondensatorgehäuse 1 kann noch mit einer zweiten gestauchten Ringsicke 5 versehen sein, die zwischen der ersten Ringsicke 4 und dem Deckel 2 angebracht ist. Die gestauchten Ringsicken 4, 5 gestatten eine Ausdehnung des Kondensatorgehäuses bei innerem Überdruck. In einem solchen Fall wird der Deckel 2 nach außen gedrückt.

Die Stirnseiten 6 und 7 des Kondensatorkörpers 3 sind mit den Kontaktschichten 8 bzw. 9 versehen, die mit jeweils einem Kondensatorbelag des Kondensatorkörpers 3 elektrisch leitend verbunden sind. Auf der oberen Kontaktschicht 8 ist der Anschlußdraht 10 aufgelötet oder aufgeschweißt. Dessen Ende 11 ist mit dem Lötstift 12 versehen, der durch die Isolierdurchführung 13 und den auf dieser befindlichen Schraubbolzen 14 hindurchgesteckt und oben bündig mit letzterem dicht verlötet ist.

An der unteren Kontaktschicht 9 ist die Abreißsicherung 15 angelötet. Diese besteht aus dem flexiblen Anschlußdraht 16, z.B. einem Kupferseil, und dem Abreißelement 17. Das Ende 18 des Anschlußdrahtes 16 ist mit dem starren Drahtstift 19 versehen. Letzterer ragt durch die Isolierdurchführung 20 und dem durchbohrten Schraubbolzen 21 hindurch. Das Ende 19' des Drahtstiftes 19 ist oben mit dem Schraubbolzen 21 dicht verlötet. Erfindungsgemäß ist der Anschlußdraht 16 derart lose eingebaut, daß sich der Deckel 2 beim Auftreten von Überdruck im Kondensatorgehäuse 1 zunächst um eine bestimmte Strecke, dem sogenannten Leerhub, nach außen bewegen kann. Dabei spannt sich die Abreißsicherung 15 bzw. der Anschlußdraht 16. Erst nach einer noch größeren Entfernung des Deckels 2 vom Kondensatorkörper 3 wird dann die Abreißsicherung 15 bzw. dessen Abreißelement 17 durchgerissen, wodurch der Kondensator von der Betriebsspannung getrennt wird.

Die Herstellung des Kondensators erfolgt beispielsweise so, daß der Kondensatorkörper 3 mit den Anschlußdrähten 10 und 16 in das gegebenenfalls vorher mit Sicken versehene Kondensatorgehäuse 1 eingesetzt wird. Dann wird der Deckel 2 aufgesteckt, wobei der Lötstift 12 in den Schraubbolzen 14 und der Drahtstift 19 in den Schraubbolzen 21 hineingesteckt wird. Der Drahtstift 19 weist eine solche Länge auf, daß er aus dem Schraubbolzen 21 herausragt. Danach wird der Deckel 2 das Kondensatorgehäuse 1 abdichtend befestigt, und es werden die Ringsicken 4 und 5 gestaucht. Der Drahtstift 19 wird nun von außen erfaßt, und die Abreißsicherung 15 bzw. der Anschlußdraht 16 wird durch leichtes Ziehen am Drahtstift 19 gespannt. Anschließend wird der Drahtstift 19 um die dem Leerhub entsprechende Strecke hineingeschoben und in dieser Lage mit dem Schraubbolzen 21 starr und elektrisch leitend verbunden. Dies geschieht beispielsweise in der Weise, daß der Drahtstift 19 oben etwas überstehend abgeschnitten und daß der überstehende Teil an seinem Ende 19' flachgequetscht wird. Hierdurch kann der Drahtstift 19 nur noch um den Betrag des Leerhubes nach innen geschoben werden. Die eigentliche Befestigung des Drahtstiftes kann durch Löten und/oder durch eine Quetschverbindung oder eine andere geeignete starre Verbindung erfolgen. Nach der Montage hängt die Abreißsicherung 15 bzw. der Anschlußdraht 16 locker im Kondensatorgehäuse 1.

Bei dem in Fig. 1 dargestellten Ausführungsbeispiel ist die Abreißsicherung 15 im Hohlraum 22 des als Wickelkörper ausgebildeten Kondensatorkörpers 3 von unten nach oben verlegt und die Isolierdurchführung 20 ist zum Hohlraum 22 versetzt im Deckel 2 angebracht. Hierdurch kann der Anschlußdraht 16 an der oberen inneren Kante 23 des Kondensatorkörpers 3 anliegen und die den Anschlußdraht 16 umgebende Isolierung 24 kann beschädigt werden. Um dies zu vermeiden, ist an der Kante 23 ein Kantenschutzteil 25 aus Metall oder Kunststoff (vgl. Fig. 2) vorgesehen. Dieses besitzt ein in den Hohlraum 22 ragendes Führungsteil 26 für den im Hohlraum 22 verlaufenden Teil der Abreißsicherung 15 und einen Flansch 27, der auf der oberen Stirnseite 6 bzw. der auf dieser aufgebauten Kontaktschicht 8 aufliegt. Vorteilhafterweise kann das Kantenschutzteil 25 aufgeklebt oder aufgelötet sein.

Bei den in den Fig. 3 und 4 gezeigten Ausführungsbeispielen der Abreißsicherung 15 besitzt das Abreißelement 17 jeweils einen Winkel aus Flachmaterial. Der nach oben ragende Schenkel des Winkels weist an den Seiten eine, beispielsweise ausgestanzte Aussparung auf, so daß der schmale Steg 28 als Sollbruchstelle stehen bleibt. Damit der Steg 28 nicht schon bei der Montage des Kondensators verbogen oder in anderer Weise verformt wird, sind auf die Seitenkanten 29 des Abreißelements 17 U-förmige Schienen 30 aus Kunststoff aufgesteckt.

Andere Ausführungsformen des Abreißelements sind in den Fig. 5 und 6 dargestellt. Diese bestehen aus einem Drahtabschnitt, der an der Sollbruchstelle geschwächt ist. In Fig. 5 ist der Drahtabschnitt im Bereich der Sollbruchstelle zunächst flachgequetscht, wie gestrichelt eingezeichnet, und anschließend sind die herausgequetschten Teile beidseitig ausgeschnitten worden. Dadurch entstehen an der Sollbruchstelle seitlich konkave Schnittkanten und ein relativ dünner durchreißbarer Steg 31.

Beim Ausführungsbeispiel gemäß Fig. 6 ist der Drahtabschnitt im Bereich der Sollbruchstelle einseitig exentrisch durch einen mechanischen Abtragungsvorgang im Querschnitt verringert, so daß der Steg 32 als Abreißstrecke stehen bleibt. Das mechanische Abtragen kann beispielsweise durch Sägen oder Schleifen oder Räumen erfolgen.

An den Drahtabschnitten der Fig. 5 und 6 werden flexible Anschlußdrähte 16 befestigt, wie anhand der Fig. 1, 3 und 4 gezeigt und beschrieben.

## Ansprüche

1. Elektrischer Kondensator mit Abreißsicherung, welcher einen in einem mit einem Deckel verschlossenen Kondensatorgehäuse angeordneten Kondensatorkörper aufweist, bei dem zwischen dem Kondensatorkörper und dem Deckel eine Abreißsicherung befestigt ist und bei dem das Kondensatorgehäuse bei einem Überdruck in seinem Inneren eine Dehnung erfährt, **dadurch gekennzeichnet,** daß die Abreißsicherung (15) mit Längsspiel eingebaut ist und wenigstens einen flexibel ausgebildeten Anschlußdraht (16) aufweist.

2. Kondensator nach Anspruch 1, dadurch gekennzeichnet, daß das Abreißelement (17) der Abreißsicherung (15) aus einem mit seitlichen Ausnehmungen versehenen Flachleiter besteht.

3. Kondensator nach Anspruch 1, dadurch gekennzeichnet, daß das Abreißelement (17) der Abreißsicherung (15) als ein mit einer Sollbruchstelle (31; 32) versehener Draht ausgebildet ist.

4. Kondensator nach einem der Ansprüche 1 bis 3, dadurch gekennzeichnet, daß die Abreißsicherung (15) durch den Hohlraum (22) eines als Wickelkörper ausgebildeten Kondensatorkörpers (3) verläuft und daß an der oberen inneren Kante (23) des Kondensatorkörpers (3) ein Kantenschutzteil (25) vorgesehen ist.

5. Kondensator nach Anspruch 4, dadurch gekennzeichnet, daß das Kantenschutzteil (25) einen in den Hohlraum (22) ragenden Führungsteil (26) für den Anschlußdraht (16) und einen auf der oberen Kontaktschicht (8) aufliegenden Flansch (27) aufweist.

6. Verfahren zur Herstellung eines Kondensators gemäß einem der Ansprüche 1 bis 5, wobei zunächst ein Kondensatorkörper mit der an ihm befestigten Abreißsicherung in das Gehäuse eingesetzt wird, anschließend das am Deckel zu befestigende Ende der Abreißsicherung bei der Montage des Deckels durch eine Öffnung desselben gesteckt wird, dann der Deckel dicht im Gehäuse befestigt und nach innen gedrückt wird, indem das Gehäuse gestaucht wird, hiernach das Ende der Abreißsicherung nach außen gezogen und mit dem Deckel fest verbunden wird, dadurch gekennzeichnet, daß das durch die Öffnung im Deckel (2) hindurchgesteckte Ende (19') der Abreißsicherung (15) zunächst bis zur Spannung derselben nach außen gezogen, anschließend um ein einen definierten Leerhub entsprechendes Maß wieder nach innen geschoben und in dieser Position am Deckel (2) befestigt wird.

FIG.1

FIG.2

FIG.6

FIG.5

FIG.3

FIG.4

J. Becher 1
21. 9. 88

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 289 041 (ROBERT BOSCH GmbH) * Seite 3, Zeilen 20-27; Seite 4, Zeilen 17-36; Ansprüche 1,3,4; Figuren 1,2,5,6 * | 1,3-5 | H 01 G 1/11 |
| Y | | 2 | |
| A | | 6 | |
| | --- | | |
| Y | DE-C- 975 029 (ROBERT BOSCH GmbH) * Seite 2, Zeilen 14-26,84-110; Figur 2 * | 2 | |
| A | | 1 | |
| | --- | | |
| A | DE-A-2 220 022 (STANDARD ELEKTRIK LORENZ AG) * Seite 6, vorletzter Absatz; Figuren 1-3 * | 1,3 | |
| | --- | | |
| A | SIEMENS BAUTEILE INFORMATIONEN, Band 8, Nr. 1, Februar 1970, Seiten 28-29, München, DE; R. KRÖS et al.: "Überdruckabreisssicherungen in Metallpapierkondensatoren" * Seite 28, rechte Spalte, zwei letzte Absätze; Seite 29, r echte Spalte, Absatz 1; Figur 3 * | 1,6 | **RECHERCHIERTE SACHGEBIETE (Int. Cl.4)** H 01 G H 01 M |
| | --- | | |
| P,X | EP-A-0 284 927 (SIEMENS AG) * Zusammenfassung; Figuren 1,3 * | 1,3 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 08-02-1989 | MES L.A. |

EPO FORM 1503 03.82 (P0403)